# EUROPÄISCHE PATENTSCHRIFT

(11) **EP 1 817 268 B1**
(45) Veröffentlichungstag und Bekanntmachung des Hinweises auf die Patenterteilung: **04.01.2017**
(21) Anmeldenummer: 05802397.9
(22) Anmeldetag: 08.11.2005
(51) Int. Cl.: C05C 5/04, C05D 9/00, C05B 11/06, C05C 1/02

(54) **VERFAHREN UND VORRICHTUNG ZUR GEWINNUNG VON SCHWEFELHALTIGEM STICKSTOFFDÜNGER**
METHOD AND DEVICE FOR OBTAINING SULPHUROUS NITROGEN FERTILISER
PROCÉDÉ ET DISPOSITIF DE PRODUCTION D'ENGRAIS AZOTÉ ET SOUFRÉ

(30) Priorität: 12.11.2004 DE 102004055648
(43) Veröffentlichungstag der Anmeldung: 15.08.2007
(73) Patentinhaber: CASALE S.A., 6900 Lugano (CH)
(72) Erfinder: JÄGER, Emmerich, A-4532 Rohr (AT); SAMBS, Georg, A-4020 Linz (AT); BRUCKBAUER, Christina, 5282 Ranshofen (AT)
(74) Vertreter: Biazzi, Riccardo
(86) Internationale Anmeldenummer: PCT/EP2005/012028
(87) Internationale Veröffentlichungsnummer: WO 2006/050936

(56) Entgegenhaltungen:
- EP-A- 1 123 910
- GB-A- 366 035
- US-A- 5 098 461

## Beschreibung

Verfahren und Vorrichtung zur Gewinnung von schwefelhaltigem Stickstoffdünger Die Erfindung betrifft ein Verfahren zur Gewinnung von schwefelhaltigem Stickstoffdünger nach Anspruch 1 sowie eine Vorrichtung nach Anspruch 8.

Rohphosphate basieren mit etwa 75% - 80% Gewichtsanteil auf dem Mineral Apatit, das Pflanzen wegen der weitgehenden Wasserunlöslichkeit dieses Materials nicht als Phosphatquelle nutzen können. Um Rohphosphate in eine für Pflanzen verfügbare Form umzuwandeln, ist es erforderlich, dem Mineral Apatit einen Teil des enthaltenen Calciums zu entziehen. Dafür wird unter anderem das Nitrophosphatverfahren, auch ODDA-Verfahren genannt, eingesetzt.

Beim Nitrophosphatverfahren wird, nach Aufschluss des Rohphosphates mit Salpetersäure in der ODDA-Anlage, durch Abkühlen des Reaktionsgemischs Calciumnitrat-Tetrahydrat ausgefällt und durch Filtration abgetrennt:

Ca₅(PO₄)₃F + 10 HNO₃ + n H₂O → 5Ca(NO₃)₂.4H₂O↓+ 3 H₃PO₄ + HF (1)

Das Filtrat wird in einer Ammonisierungsapparatur mit Ammoniak neutralisiert und enthält Phosphat, das im daraus produzierten Düngergranulat in bis zu 90% wasserlöslicher Form vorliegt. Durch Zugabe von weiteren stickstoffhaltigen Komponenten, Kalisalzen und anderen Komponenten werden daraus je nach Anforderung Komplexdünger mit den Hauptnährstoffen Stickstoff, Phosphor und Kali, mit Sekundärnährstoffen wie beispielsweise Magnesium und Schwefel und mit Spurennährstoffen erzeugt.

Das aus der Aufschlusslösung durch Kühlung ausgefällte Calciumnitrat-Tetrahydrat wird durch Filtration vom Filtrat, einer zumeist 30%igen Phosphorsäure mit etwa 8% Salpetersäure, abgetrennt. Calciumnitrat-Tetrahydrat kann, mit einem Zusatz von etwa 20 Mol% Ammoniumnitrat, zum Stickstoffeinzeldünger "Kalksalpeter" verarbeitet werden.

Bei den meisten Produktionsverfahren wird Calciumnitrat-Tetrahydrat mit Ammoniumcarbonat zu Kalk und Ammoniumnitrat umgesetzt, woraus der Stickstoffeinzeldünger "Kalkammonsalpeter", ein Gemisch von Kalk und Ammoniumnitrat, produziert wird.

Ca(NO₃)₂.4H₂O + (NH₄)₂CO₃ → CaCO₃ ↓+ 2 NH₄NO₃ + 4 H₂O (2)

Eine Übersicht über die genannten Prozesse ist in Winnacker Küchler "Chemische Technologie", Band 2, 4. Auflage, 1982; Seite 356 - Seite 360 gegeben.

GB 366,035 beschreibt ein Verfahren zur Herstellung von nichthygroskopischen Ammoniumsulfat und -nitrat. Hierzu werden Ammoniumnitrat und Ammoniumsulfat in fester Form oder in Lösung gemischt und mit festem oder gelöstem Calciumnitrat versetzt. Die Mischung kann während des Mischungsvorganges erwärmt und getrocknet oder im Anschluss getrocknet werden.

Aus der EP 1123910 A2 ist die Herstellung von anorganischem Dünger in Granulatform durch Vermischen des Düngers (z.B. Ammoniumsulfat) in Gegenwart eines Polysaccharids und Calciumnitrat bekannt. Calciumnitrat fungiert dabei lediglich als Granulationshilfe. Es erfolgt keine chemische Reaktion zwischen dem Dünger und Calciumnitrat.

In den letzten Jahren ist gebietsweise, wegen der Verminderung der Schwefelemissionen infolge vermehrter Rauchgasentschwefelung und Reduktion des Schwefelgehaltes in Treibstoffen, eine Verarmung an Schwefel in landwirtschaftlich genutzten Böden festzustellen. Der Schwefelentzug durch Pflanzen muss durch Schwefelgaben über Düngemittel ergänzt werden. Die Nachfrage nach schwefelhaltigen Düngern, insbesondere nach Stickstoffeinzeldüngern mit Schwefel, ist steigend.

Eine der möglichen schwefelhaltigen Komponenten zur Produktion schwefelhaltiger Dünger ist Gips. Es ist bekannt, Rohphosphat anstelle von Salpetersäure mit Schwefelsäure aufzuschließen und den ausgefällten Gips und das Filtrat zu den gewünschten Produkten aufzuarbeiten. Dieses Verfahren ist als Nasssäureverfahren bekannt.

Aus US 3 653 872 oder GB 1 247 365 sind Kreislaufprozesse bekannt, bei denen das Filtrat des Nasssäureverfahrens zu Dünger aufgearbeitet wird, während der Fällungsgips in Calciumcarbonat umgewandelt und das Sulfat wieder zum Rohphosphataufschluss rückgeführt wird.

Es sind auch Verfahren bekannt, welche den Fällungsgips zur Produktion von schwefelhaltigen Komplexdüngern einsetzen. Dies ist beispielsweise in RU 2186751 und Winnacker Küchler "Chemische Technologie", Band 2, 4. Auflage, 1982; Seite 356 - Seite 360 beschrieben.

Den genannten Verfahren ist gemein, dass durch Zugabe der Schwefelsäure beim Rohphosphataufschluss der sogenannte Fällungsgips entsteht, welcher anschließend weiterverarbeitet wird. Dabei ist nachteilig, dass der feinkristalline Fällungsgips vor der weiteren Verarbeitung abfiltriert werden muss, was technisch äußerst schwierig ist. Desweiteren entstehen bei der Gipsfällung Gipshalbhydrat oder Gipsdihydrat, welche hochviskose Pasten bilden und deshalb nicht mit anderen Bestandteilen zu Dünger anmaischbar und granulierbar sind. Darüber hinaus enthält der Fällungsgips einen Teil der Schwermetallverunreinigungen des Rohphosphates. Dadurch ist sein Einsatzgebiet sehr eingeschränkt; zumeist muss der Fällungsgips deponiert werden, was in zunehmendem Maße mit hohen Kosten verbunden ist.

Es istdeshalb wünschenswert, ein einfaches Verfahren zu finden, das die Möglichkeit bietet, insbesondere in bestehenden Nitrophosphatanlagen ohne kosten- und zeitintensive Umrüstungsarbeiten und ohne die technisch schwierige Abtrennung von Fällungsgips einen schwefelhaltigen Stickstoffdünger produzieren zu können.

Gegenstand der Erfindung ist demnach ein Verfahren zur Herstellung von schwefelhaltigem Stickstoffdünger, das dadurch gekennzeichnet ist, dass Calciumnitrat in einer Mischapparatur mit eine Schwefelsäure und Ammoniak bei annähernder Siedetemperatur unter Ausbildung einer gipshaltigen Suspension aus wasserfreiem Gipsanhydrit umgesetzt wird und durch Granulierung der entstehenden gipshaltigen Suspension der Dünger erhalten wird.

Überraschenderweise ist die auf diese Weise erhaltene gipshaltige Suspension dünnflüssig und damit leicht pumpbar und kann mit anderen Komponenten angemaischt und in herkömmlichen Granulierungsapparaturen verarbeitet werden. Das Verfahren ist vor allem deshalb einfach, weil es ohne die technisch aufwändige Abtrennung des beim Rohsphosphataufschluss entstehenden Fällungsgipses auskommt.

Das Calciumnitrat kann in jeder beliebigen Form, beispielsweise als im Handel erhältliche wässrige Lösung, eingesetzt werden. Es ist auch möglich, durch Reaktion von CaCO₃ mit HNO₃ erhaltenes Calciumnitrat zu verwenden.

Besonders bevorzugt ist es, wenn das Calciumnitrat bei der Komplexdüngerproduktion nach dem Nitrophosphatverfahren anfallendes Calciumnitrat-Tetrahydrat ist. Auf diese Weise kann das im Rohphosphat enthaltene Calcium für die Herstellung von vermehrt benötigtem schwefelhaltigem Stickstoffdünger genutzt werden.

Als Schwefelquelle kann jede beliebige Schwefelverbindung, beispielsweise die Sulfate Magnesiumsulfat oder Ammoniumsulfat dienen. Vorteilhafterweise wird als Schwefelverbindung Schwefelsäure eingesetzt. Schwefelsäure ist deshalb von Vorteil, weil es als Flüssigkeit leichter zu handhaben ist als feste Sulfate.

Erfindungsgemäß wird als Sulfatverbindung Schwefelsäure verwendet und die Umsetzung erfolgt in einer Ammonisierungsapparatur in Gegenwart von Ammoniak. Eine Ammonisierungsapparatur ist üblicher Bestandteil einer Nitrophosphatanlage zur Herstellung von Komplexdünger. In der Nitrophosphatanlage wird die Nitrophosphorsäure nach dem Rohphosphataufschluss in der Ammonisierungsapparatur mit Ammoniakgas neutralisiert. Üblicherweise ist eine Ammonisierungsapparatur als Loop-Reaktor mit Umwälzpumpe ausgeführt.

Wird das Calciumnitrat gemäß der vorteilhaften Ausgestaltung mit Schwefelsäure und Ammoniak in einer Ammonisierungsapparatur umgesetzt, wird dort eine sehr gute Durchmischung erreicht. Es findet eine Neutralisierungsreaktion statt, wobei Neutralisationswärme gebildet wird, sodass die Umsetzung bei annähernd Siedetemperatur stattfindet. Diese hohe Temperatur bei der Umsetzung ist vorteilhaft, da auf diese Weise eine Suspension mit wasserfreiem Gipsanhydrit entsteht. Gipsanhydrit ist vor allem deshalb erwünscht, weil er sehr gute Granulierungseigenschaften aufweist. Es wird eine pumpbare, gipshaltige Suspension mit einem Wassergehalt von etwa 15 bis 25 Gew % erhalten.

Das Ammoniak wird üblicherweise als Ammoniakgas eingesetzt, es ist aber auch möglich, flüssiges Ammoniak oder Ammoniakwasser zu verwenden.

Das Nitrat im Calciumnitrat dient als Stickstoffkomponente im hergestellten Dünger.

Weitere Stickstoffquellen wie beispielsweise Ammoniak oder Ammoniumnitrat können ebenfalls zugesetzt werden.

Vorteilhaft ist es, wenn dem Calciumnitrat vor und/oder bei der Umsetzung und/oder vor der Granulation Ammoniumnitrat zugesetzt wird. Das Ammoniumnitrat kann dabei vorteilhafterweise als wässrige Ammoniumnitratlösung vor der Umsetzung des Calciumnitrates mit der Sulfatverbindung zugesetzt werden. Dabei wird es mit dem Calciumnitrat vermischt, bevor dieses mit dem Sulfat reagiert. Auf diese Weise wird eine bessere Löslichkeit des Calciumnitrates erreicht.

Weiters ist es möglich, wässrige Ammoniumnitratlösung direkt bei der Umsetzung des Calciumnitrates mit dem Sulfat oder auch vor der Granulation des Düngers zuzusetzen. Die Konzentration der zugesetzten Ammoniumnitratlösung liegt beispielsweise bei 64 Gew% oder auch bei 94 Gew%. Es ist auch möglich, das Ammoniumnitrat als Schmelze einzusetzen.

Werden ausschließlich stickstoffhaltige Komponenten zugesetzt, wird ein schwefelhaltiger Stickstoffeinzeldünger, beispielsweise vom Typ "Ammonnitrat mit Schwefel", "Ammonsulfatsalpeter" oder "Stickstoff Magnesia" erhalten.

Weiters ist es möglich, andere Komponenten als Stickstoff, wie beispielsweise Kalisalze, Phosphorsalze, Magnesiumsalze oder sonstige übliche Düngerzusätze zuzuführen. Auf diese Weise wird ein schwefelhaltiger Komplexdünger erhalten.

Die Begriffsbestimmung der Düngemitteltypen ist in der deutschen Düngemittelverordnung in der Fassung vom 26. November 2003 [BGBI. I S.2373] geregelt.

In einer besonders bevorzugten Ausführungsform erfolgt das erfindungsgemäße Verfahren kontinuierlich und ist in eine Anlage zur kontinuierlichen Produktion von Komplexdünger nach dem Nitrophosphatverfahren integriert. Dabei kann die Nitrophosphatanlage auch eine sein, welche schwefelhaltigen Komplexdünger, beispielsweise durch Zugabe von Schwefelsäure bei der Ammonisierung der Nitrophosphorsäure, herstellt. Üblicherweise ist an die Nitrophosphatanlage eine Anlage zur Gewinnung von Kalkammonsalpeter aus dem Calciumnitrat-Tetrahydrat gekoppelt.

Auf diese Weise ist es möglich, in einem einfachen Verfahren als Kuppelprodukt des Komplexdüngers schwefelhaltigen Stickstoffdünger herzustellen. Der Vorteil liegt darin, dass nicht wie in herkömmlichen Verfahren die technisch äußerst schwierige Abtrennung von Fällungsgips nötig ist. Da die Gipsfällung erfindungsgemäß erst nach dem Phosphataufschluss erfolgt, ist keine Abtrennung nötig und die entstehende gipshaltige Suspension kann aufgrund ihrer leichten Pumpbarkeit und Sprühfähigkeit, eventuell nach Zumischen weiterer Komponenten, direkt zu Düngergranulat weiterverarbeitet werden.

Besonders vorteilhaft ist eine Ausführungsform, bei welcher an die Nitrophosphatanlage eine Anlage zur Gewinnung von Kalkammonsalpeter aus dem Calciumnitrat-Tetrahydrat gekoppelt ist und der schwefelhaltige Stickstoffdünger in der Kalkammonsalpeteranlage durch Umsetzung von Calciumnitrat-Tetrahydrat mit Schwefelsäure in einer Ammonisierungsapparatur hergestellt wird.

Die Kalkammonsalpeteranlage weist üblicherweise eine Granulierungseinheit auf, welche zur Granulierung der gipshaltigen Suspension genutzt werden kann. Auf diese Weise ist es möglich, durch Installieren nur einer Ammonisierungsapparatur in einer bestehenden Nitrophosphatanlage ohne kosten- und zeitintensive Umrüstungsarbeiten aus dem gefällten Calciumnitrat wahlweise Kalkammonsalpeter oder schwefelhaltigen Stickstoffdünger zu produzieren.

In einer weiteren bevorzugten Ausführungsform wird der schwefelhaltige Stickstoffdünger in einer Nitrophosphatanlage, welche mindestens zwei Ammonisierungsapparaturen zur Neutralisierung der Nitrophosphorsäure aufweist, durch Umsetzung von Calciumnitrat-Tetrahydrat mit Schwefelsäure in einer der Ammonisierungsapparaturen hergestellt.

Diese Ausführungsform ist beispielsweise in einer Nitrosphosphatanlage mit zwei ODDA-Linien, zwei Ammonisierungs- und zwei Granulierungslinien durchführbar. Während eine Linie in herkömmlicher Weise zur Herstellung von Komplexdünger verwendet wird, befindet sich die zweite ODDA-Linie außer Betrieb, und die zweite Ammonisierung und Granulierung werden für die Herstellung des Schwefeldüngers genutzt. Es ist auch möglich, das erfindungsgemäße Verfahren in Nitrophosphatanlagen, die mehr als zwei Ammonisierungs- und Granulierungslinien aufweisen, durchzuführen. Üblicherweise ist an die Nitrophosphatanlage eine Anlage zur Gewinnung von Kalkammonsalpeter gekoppelt, sodass auf diese Weise gleichzeitig sowohl Kalkammonsalpeter als auch schwefelhaltiger Stickstoffldünger als Kuppelprodukt des Komplexdüngers produziert werden kann. Die hohe Flexibilität eines solchen Prozesses macht es möglich, innerhalb kürzester Zeit die Düngerproduktion der jeweiligen Marksituation anzupassen.

Im folgenden wird das aus dem Stand der Technik bekannte Vergleichsverfahren in Figur 1 sowie Ausführungsformen des erfindungsgemäßen Verfahrens anhand der Figuren 2 und 3 beschrieben.

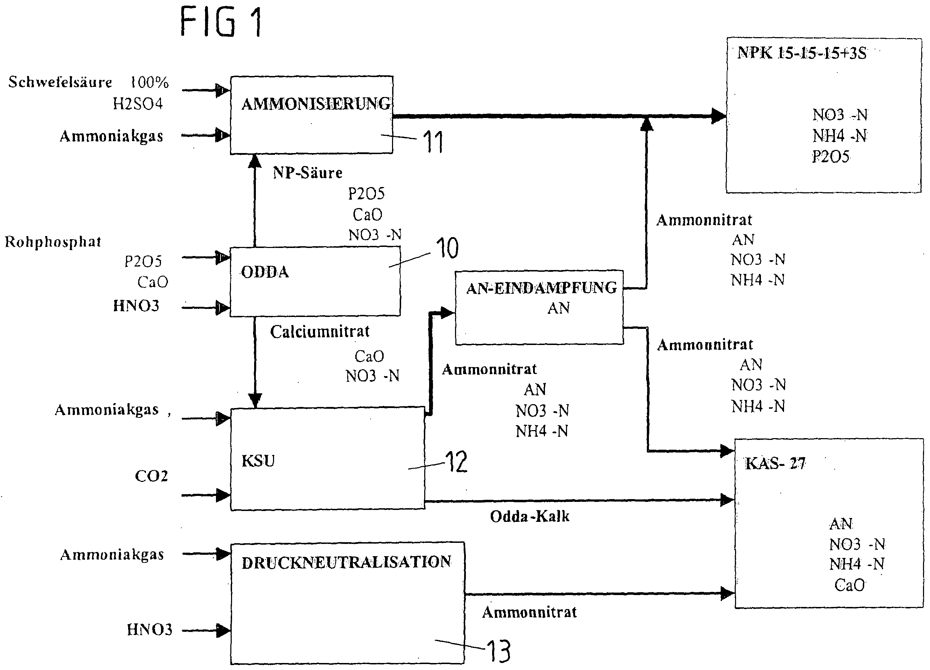

Fig. 1 zeigt das Blockschema eines Nitrophosphatprozesses, bei welchem Komplexdünger des Typs NPK15-15-15 + 3S hergestellt und aus dem Calciumnitrat schwefelfreier Kalkammonsalpeter gewonnen wird.

In einer ODDA-Anlage 10 wird das Rohphosphat mit Salpetersäure aufgeschlossen, wobei festes Calciumnitrat-Tetrahydrat erhalten wird. Dieses wird von der Nitrophosphorsäure abfiltriert, welche in einer Ammonisierungsapparatur mit Schwefelsäure umgesetzt und mit Ammoniakgas neutralisiert wird. Die erhaltene Suspension wird mit Ammoniumnitrat vermischt und nach Granulation daraus der Komplexdünger (NPK 15-15-15+3S) erhalten.

Das beim Rohphosphataufschluss ausgefällte Calciumnitrat wird in der Kalksalpeterumwandlung 12 mit Ammoniakgas und Karbonat zu Ammoniumnitrat und ODDA-Kalk verarbeitet. Während der ODDA-Kalk der Herstellung des schwefelfreien Kalkammonsalpeters dient, wird das Ammoniumnitrat nach dessen Aufkonzentrierung teils dem Kalkammonsalpeter (KAS 27), teils dem Komplexdünger (NPK 15-15-15+3S) zugeführt.

Ein Großteil der Rohstoffe für den Kalkammonsalpeter, nämlich Ammoniak und Salpetersäure, wird frisch zugeführt und in einem beispielsweise als Druckneutralisation 13 ausgeführten Reaktor zu Ammoniumnitrat verarbeitet.

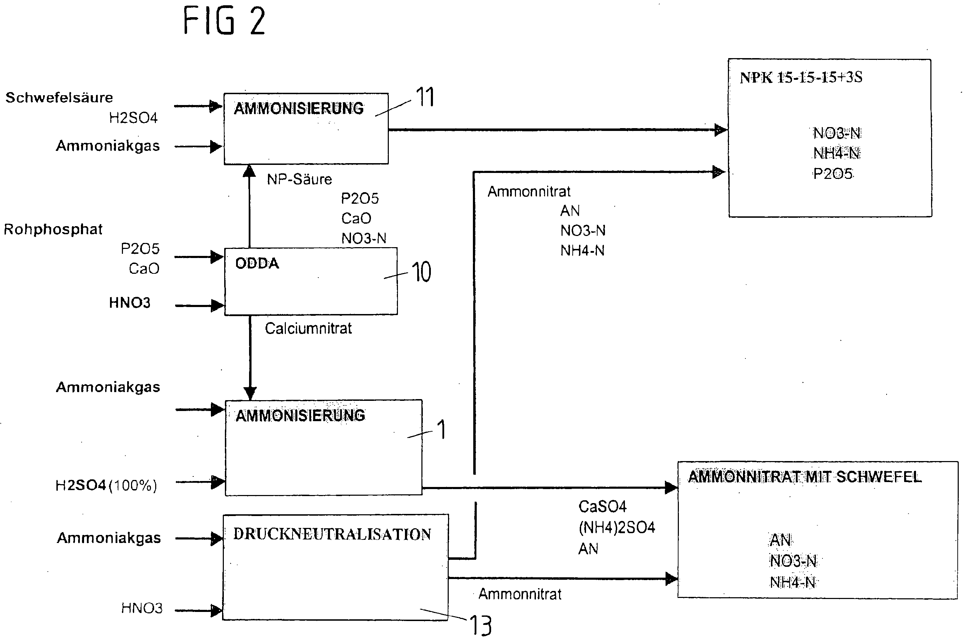

Fig. 2 zeigt das Blockschema eines Nitrophosphatprozesses, bei welchem Komplexdünger des Typs NPK15-15-15 + 3S hergestellt und aus dem Calciumnitrat in einer-Kalkammonsalpeteranlage schwefelhaltiger Stickstoffeinzeldünger des Typs "Ammonnitrat mit Schwefel" gewonnen wird. Hierbei handelt es sich um eine Ausführungsform des erfindungsgemäßen Verfahrens und einer erfindungsgemäßen Vorrichtung.

Während die Nitrophosphorsäure nach dem Rohphosphataufschluss in herkömmlicher Weise zu Komplexdünger aufgearbeitet wird, wird das beim Rohphosphataufschluss erhaltene Calciumnitrat-Tetrahydrat in einer um eine Ammonisierungsapparatur 1 als Mischapparatur erweiterte Kalkammonsalpeteranlage mit konzentrierter Schwefelsäure unter Ammoniakzufuhr umgesetzt. Die erhaltene gipshaltige Suspension wird abgepumpt, mit Ammoniumnitrat aus der Druckneutralisation (d.h. dem Reaktor) vermischt und zum Schwefeldünger "Ammonnitrat mit Schwefel" granuliert.

Die Verarbeitung der Nitrophosphorsäure nach der ODDA-Anlage 10 entspricht der Darstellung in Fig. 1, so dass auf diese Beschreibung Bezug genommen werden kann.

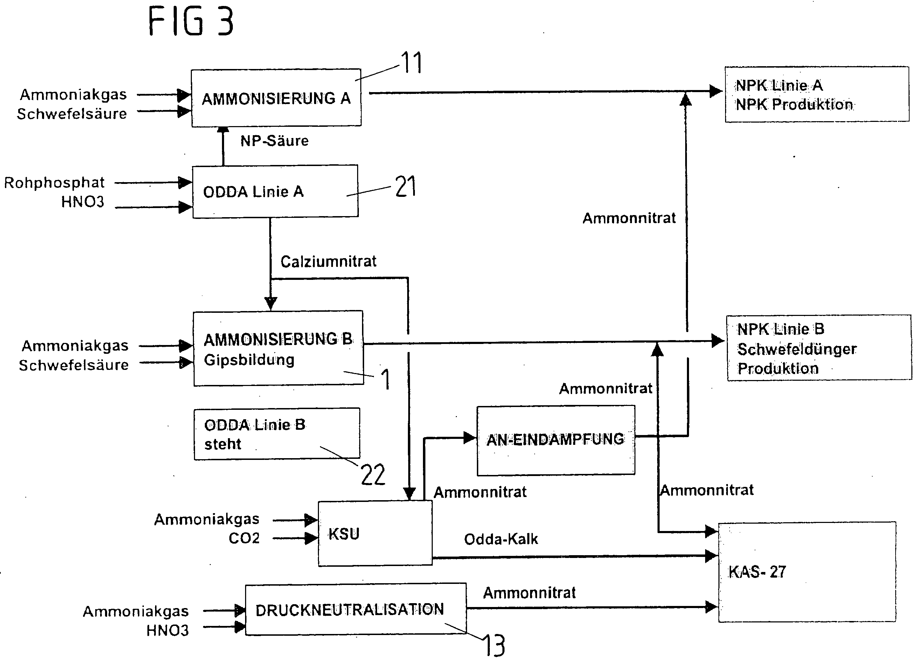

Fig. 3 zeigt das Blockschema eines Nitrophosphatprozesses, bei welchem Komplexdünger, schwefelfreier Kalkammonsalpeter und schwefelhaltiger Stickstoffeinzeldünger hergestellt wird. Dies ist eine weitere Ausführungsform der vorliegenden Erfindung.

In einer Nitrophosphatanlage mit zwei ODDA-Linien 21, 22, zwei Ammonisierungslinien 11, 1 und zwei Granulierungslinien wird in einer der Linien in herkömmlicher Weise Komplexdünger des Typs NPK erzeugt.

In der Ammonisierungsapparatur 1 der zweiten ODDA-Linie wird aus einem Teil des beim Rohphosphataufschluss entstehenden Calciumnitrates mit Hilfe von Schwefelsäure und Ammoniakgas und unter Zufuhr von Ammoniumnitrat Schwefeldünger produziert. Ein zweiter Teil des Calciumnitrates wird in der Kalksalpeterumwandlung und mit Ammoniumnitrat aus der Druckneutralisation in herkömmlicher Weise zu schwefelfreiem Kalkammonsalpeter verarbeitet.

### Beispiel 1: Herstellung von "Ammonnitrat mit Schwefel"

In einem kontinuierlichen Prozess wurden 23,4 Tonnen/h filterfeuchtes Calciumnitrat-Tetrahydrat in einem Rührbehälter mit 17 Tonnen/h 64%iger Ammoniumnitratlösung gemischt. Das resultierende Gemisch von 40,4 Tonnen/h wurde, gemeinsam mit 10,39 Tonnen/h 96%iger Schwefelsäure und 7,2 Tonnen 94%iger Ammoniumnitratlösung in eine Ammonisierungsapparatur eingebracht. Mit 3,5 Tonnen/h Ammoniakgas wurde der pH-Wert des Gemisches auf pH 5,5 gebracht. Die aus der Ammonisierungsapparatur bei 125 °C austretende Maische war ein sehr dünnflüssiges Gemisch, welches mit einer Pumpe gefördert und in eine mit Heißluft beheizte Granuliertrommel gesprüht wurde. Das resultierende Granulat hatte folgende Nährstoffgehalte: 25% Stickstoff und 7% Schwefel.

Bezugszeichen
- 1: Mischapparatur (Ammonisierung)
- 10: ODDA Anlage
- 11: Ammonisierung
- 12: Kalksalpeterumwandlung
- 13: Druckneutralisation (Reaktor)
- 21: ODDA-Line A
- 22: ODDA-Linie B

- NP-Säure: Nitrophosphorsäure
- KSU: Kalksalpeterumwandlung
- AN: Ammoniumnitrat
- NPK: Stickstoff Phosphor Kali
- KAS: Kalkammonsalpeter

## Patentansprüche

1. Verfahren zur Herstellung von schwefelhaltigem Stickstoffdünger, **dadurch gekennzeichnet,**
**dass** Calciumnitrat in einer Mischapparatur (1) mit Schwefelsäure und Ammoniak bei annähender Siedetemperatur unter Ausbildung einer gipshaltigen Suspension aus wasserfreiem Gipsanhydrit umgesetzt wird und durch Granulierung der entstehenden gipshaltigen Suspension der Dünger erhalten wird.

2. Verfahren nach Anspruch 1, **dadurch gekennzeichnet, dass** das Calciumnitrat bei der Komplexdüngerproduktion nach dem Nitrophosphatverfahren anfallendes Calciumnitrat-Tetrahydrat ist.

3. Verfahren nach Anspruch 1 oder 2, **dadurch gekennzeichnet, dass** die Umsetzung in einer Ammonisierungsapparatur (1) als Mischapparatur erfolgt.

4. Verfahren nach mindestens einem der vorher genannten Ansprüche, **dadurch gekennzeichnet, dass** vor und/oder bei der Umsetzung und/oder vor der Granulation Ammoniumnitrat zugesetzt wird.

5. Verfahren nach mindestens einem der vorher genannten Ansprüche, **dadurch gekennzeichnet, dass** das Verfahren kontinuierlich erfolgt und in eine Anlage zur kontinuierlichen Produktion von Komplexdünger nach dem Nitrophosphatverfahren integriert ist.

6. Verfahren nach Anspruch 5, **dadurch gekennzeichnet, dass** an die Nitrophosphatanlage eine Anlage zur Gewinnung von Kalkammonsalpeter aus dem Calciumnitrat-Tetrahydrat gekoppelt ist und der schwefelhaltige Stickstoffdünger in der Kalkammonsalpeteranlage durch Umsetzung von Calciumnitrat-Tetrahydrat mit Schwefelsäure in einer Ammonisierungsapparatur (1) hergestellt wird.

7. Verfahren nach Anspruch 5, **dadurch gekennzeichnet, dass** der schwefelhaltige Stickstoffdünger in einer Nitrophosphatanlage, welche mindestens zwei Ammonisierungsapparaturen (1, 11) zur Neutralisierung der Nitrophosphorsäure aufweist, durch Umsetzung von Calciumnitrat-Tetrahydrat mit Schwefelsäure in einer der Ammonisierungsapparaturen hergestellt wird.

8. Vorrichtung zur Durchführung eines Verfahrens zur Herstellung von schwefelhaltigem Stickstoffdünger nach mindestens einem der Ansprüche 1 bis 7 **gekennzeichnet durch**
- mindestens eine Nitrophosphatanlage mit mindestens einer Einheit (10, 21) zum Abtrennen von Calciumnitrat-Tetrahydrat,
- mindestens eine Ammonisierungsapparatur (1) als Mischapparatur zur Umsetzung von Calciumnitrat-Tetrahydrat mit Schwefelsäure,
- mindestens eine Leitung zum Transport des Calciumnitrat-Tetrahydrats zur Ammonisierungsapparatur (1).

9. Vorrichtung nach Anspruch 8, **gekennzeichnet durch**
- mindestens eine Einheit zur Granulierung der gipshaltigen Suspension,
- mindestens eine Leitung zum Transport der gipshaltigen Suspension zur Granulierungseinheit und
- mindestens eine Vorrichtung zum Austrag des schwefelhaltigen Stickstoffdüngers.

## Claims

1. Method for obtaining sulfurous nitrogen fertilizer,
**characterized in that**
calcium nitrate is converted in a mixing apparatus (1) with sulfuric acid and ammonia at approximate boiling temperature by forming a gypsum containing suspension of anhydrous gypsum anhydrite, and that the fertilizer is obtained by granulating the resulting gypsum containing suspension.

2. Method according to claim 1, **characterized in that** the calcium nitrate is calcium nitrate tetrahydrate resulting from the complex fertilizer production according to the nitrophosphate method.

3. Method according to claim 1 or 2, **characterized in that** the conversion is done in a ammonization apparatus (1) as mixing apparatus.

4. Method according to at least one of the preceding claims, **characterized in that** ammonium nitrate is added before and/or during the conversion and/or before the granulation.

5. Method according to at least one of the preceding claims, **characterized in that** the method is done continuously and is integrated into a plant for continuous production of complex fertilizer according to the nitrophosphate method.

6. Method according to claim 5, **characterized in that** a plant for obtaining calcium ammonium nitrate from calcium nitrate tetrahydrate is coupled to the nitrophosphate plant, and the sulfurous nitrogen fertilizer is obtained in the calcium ammonium nitrate plant by converting calcium nitrate tetrahydrate with sulfuric acid in a ammonization apparatus (1)

7. Method according to claim 5, **characterized in that** the sulfurous nitrogen fertilizer is obtained in a nitrophosphate plant which comprises at least two ammonization apparatuses (1, 11) for neutralizing the nitrophosphoric acid, by converting calcium nitrate tetrahydrate with sulfuric acid in one of the ammonization apparatus.

8. Device for conducting a method for obtaining a sulfurous nitrogen fertilizer according to at least one of the claims 1 to 7,
**characterized by**
- at least one nitrophosphate plant with at least one unit (10, 21) for separating calcium nitrate tetrahydrate,
- at least one ammonization apparatus (1) as mixing apparatus for converting calcium nitrate tetrahydrate with sulfuric acid,
- at least one pipeline for transporting the calcium nitrate tetrahydrate to the ammonization apparatus (1).

9. Device according to claim 8, **characterized by**
- at least one unit for granulating the gypsum containing suspension,
- at least one pipeline for transporting the gypsum containing suspension to the granulation unit, and
- at least one device for discharging the sulfurous nitrogen fertilizer.

## Revendications

1. Procédé de production d'un engrais azoté soufré,
**caractérisé en ce**
**que** du nitrate de calcium est mis à réagir dans un appareil mélangeur (1) avec de l'acide sulfurique et de l'ammoniaque sensiblement à température d'ébullition en formant une suspension gypsifère composée d'anhydrite de gypse dépourvu d'eau et l'engrais est obtenu par granulation de la suspension gypsifère produite.

2. Procédé selon la revendication 1, **caractérisé en ce que** le nitrate de calcium est du nitrate de calcium tétrahydraté obtenu lors de la production d'engrais complexes selon le procédé au nitrophosphate.

3. Procédé selon la revendication 1 ou 2, **caractérisé en ce que** la réaction a lieu dans un appareil d'ammoniation (1) en tant qu'appareil mélangeur.

4. Procédé selon au moins l'une des revendications précédentes, **caractérisé en ce que** du nitrate d'ammonium est ajouté avant et/ou lors de la réaction et/ou avant la granulation.

5. Procédé selon au moins l'une des revendications précédentes, **caractérisé en ce que** le procédé a lieu de façon continue et est intégré dans une installation de production continue d'engrais complexes selon le procédé au nitrophosphate.

6. Procédé selon la revendication 5, **caractérisé en ce qu'**à l'installation au nitrophosphate est couplée une installation de production de nitrate d'ammonium de calcium à partir du nitrate de calcium tétrahydraté et l'engrais azoté soufré est produit dans l'installation à nitrate d'ammonium de calcium par réaction du nitrate de calcium tétrahydraté avec de l'acide sulfurique dans un appareil d'ammoniation (1).

7. Procédé selon la revendication 5, **caractérisé en ce que** l'engrais azoté soufré est produit dans une installation au nitrophosphate qui présente au moins deux appareils d'ammoniation (1, 11) pour neutraliser l'acide nitrophosphorique par réaction du nitrate de calcium tétrahydraté avec de l'acide sulfurique dans un des appareils d'ammoniation.

8. Dispositif pour mettre en oeuvre un procédé de production d'un engrais azoté soufré selon au moins l'une des revendications 1 à 7,
**caractérisé par**
- au moins une installation au nitrophosphate comprenant au moins une unité (10, 21) pour séparer le nitrate de calcium tétrahydraté,
- au moins un appareil d'ammoniation (1) comme appareil mélangeur pour faire réagir le nitrate de calcium tétrahydraté avec de l'acide sulfurique,
- au moins une conduite pour transporter le nitrate de calcium tétrahydraté vers l'appareil d'ammoniation (1).

9. Dispositif selon la revendication 8, **caractérisé par**
- au moins une unité de granulation de la suspension gypsifère,
- au moins une conduite pour transporter la suspension gypsifère vers l'unité de granulation et
- au moins un dispositif pour évacuer l'engrais azoté soufré.
